# FASCICULE DE BREVET EUROPEEN

(11) **EP 1 241 803 B1**
(45) Date de publication et mention de la délivrance du brevet: **22.09.2004**
(21) Numéro de dépôt: 01402694.2
(22) Date de dépôt: 18.10.2001
(51) Int. Cl.: H04B 7/185

(54) **Système procurant un service de radiotéléphone à bord d'un véhicule**
System für Funktelefondienst an Bord eines Fahrzeugs
System for radiotelephone service on bord of a vehicle

(30) Priorité: 15.03.2001 FR 0103527
(43) Date de publication de la demande: 18.09.2002
(73) Titulaire: ALCATEL, 75008 Paris (FR)
(72) Inventeur: Auvray, Gérard, 95870 Bezons (FR); Charpentier, Jean, 78220 Viroflay (FR)
(74) Mandataire: Sciaux, Edmond

(56) Documents cités:
- EP-A- 0 920 147
- EP-A- 1 041 737
- EP-A- 1 079 547

## Description

La présente invention concerne un système procurant un service de radiotéléphone à bord d'un véhicule.

Elle se rapporte plus précisément à un système procurant un service de radiotéléphone à bord d'un véhicule, ce système étant relié à un réseau de radiotéléphone terrestre public par l'intermédiaire d'un satellite.

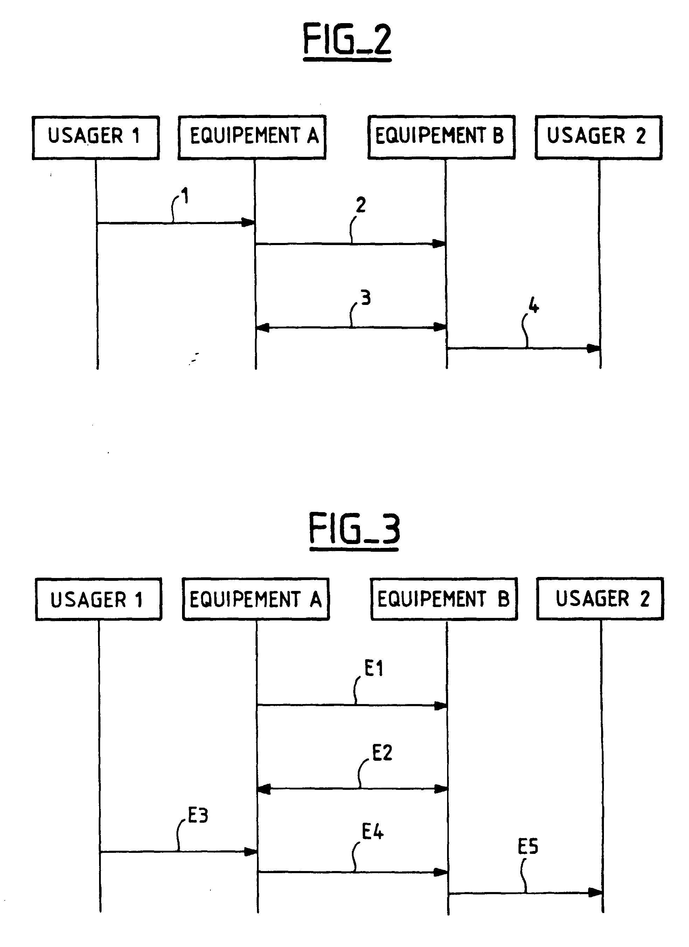

Actuellement, de façon classique, et comme représenté sur la figure 2 correspondant à l'art antérieur, si l'on considère deux équipements A et B de radiotéléphone, l'un équipant un véhicule et l'autre utilisé par le réseau terrestre, lorsqu'un usager 1, situé dans le véhicule et utilisant donc l'équipement A de ce véhicule, demande l'établissement d'un appel avec un usager 2 terrestre, le processus de connexion radio téléphonique se fait comme suit :
- Etape 1 : Demande de liaison du téléphone du passager 1 avec l'équipement A ;
- Etape 2 : Demande de connexion entre l'équipement A et l'équipement B ;
- Etape 3 : Procédure d'établissement et d'activation de la connexion entre les équipements A et B ;
- Etape 4 : Liaison de l'équipement B vers l'usager 2.

Le temps d'établissement de la connexion entre les équipements A et B retarde donc l'établissement de la liaison radio téléphonique entre les deux usagers 1 et 2.

EP-A-1 079 547 décrit ce type de système.

L'invention résout ce problème et, pour ce faire, le système conforme à l'invention comprend des moyens pour établir au moins une connexion dite de transport entre le véhicule et le réseau de radiotéléphone terrestre avant de recevoir toute demande d'établissement d'un appel et pour utiliser cette connexion de transport pour un appel dès qu'une demande d'établissement d'un appel est reçue.

L'on obtient ainsi une liaison entre usagers plus rapide, l'étape 2 et au moins une partie de l'étape 3 ci-dessus étant supprimées lors de l'appel radio téléphonique entre usagers.

Selon un mode de réalisation préféré, ladite connexion de transport est une connexion à l'état de veille.

Cette connexion à l'état de veille est donc non consommatrice de ressources.

Avantageusement, la durée de ladite connexion de transport est limitée et réactivée selon une temporisation.

L'invention est décrite ci-après plus en détail à l'aide de figures ne représentant qu'un mode de réalisation préféré de l'invention.

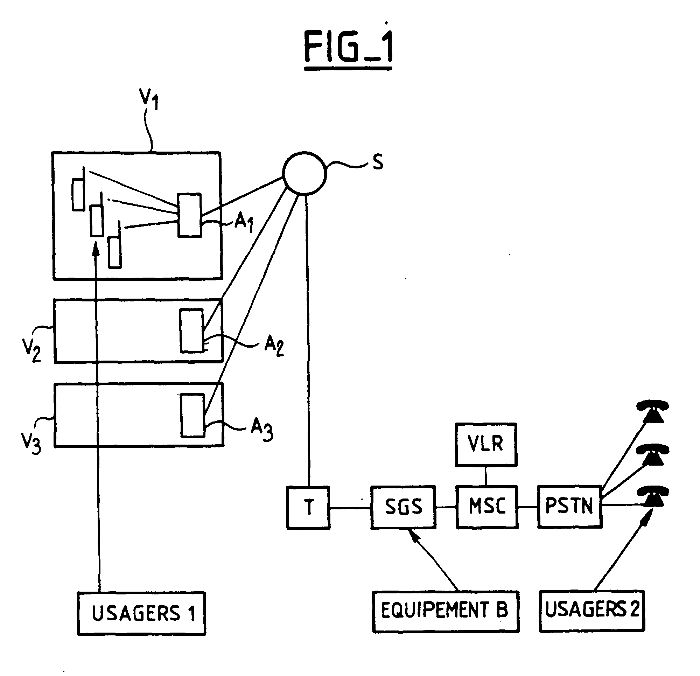

La figure 1 est une vue schématique de l'établissement des liaisons radio téléphoniques entre différents véhicules, ici des avions, et des équipements terrestres.

Comme déjà vu, la figure 2 est un diagramme représentatif des étapes d'établissement d'une liaison radio téléphonique entre deux usagers, l'un se trouvant dans un véhicule pourvu d'un équipement de connexion et l'autre utilisant un équipement de connexion terrestre, selon l'art antérieur.

La figure 3 est un diagramme représentatif des étapes d'établissement d'une liaison radio téléphonique entre deux usagers, l'un se trouvant dans un véhicule pourvu d'un équipement de connexion et l'autre utilisant un équipement de connexion terrestre, selon l'invention.

Comme représenté sur la figure 1, un système de radiotéléphonie comprend de façon classique un réseau mobile public terrestre comportant un contrôleur de trafic MSC (en anglais Mobile Switching Center) connecté à un registre des abonnés visiteurs VLR (en anglais Visitor Location Register) et relié au réseau public téléphonique PSTN (en anglais Public Switching Telephone Network).

Le contrôleur de trafic MSC est relié également par l'intermédiaire d'une passerelle SGS et d'une station terrestre T à un satellite S qui envoie les signaux radio aux équipements de connexion Ai des différents véhicules par exemple des avions Vi.

Le système conforme à l'invention procure un service de radiotéléphone à bord des véhicules Vi pourvu d'équipements de connexion Ai, ce système étant relié au réseau de radiotéléphone terrestre public par l'intermédiaire du satellite S.

Dans ce qui suit, il est donc entendu que toute liaison radio téléphonique entre un usager d'un véhicule, par exemple un avion, est réalisée par l'intermédiaire du satellite S.

Comme représenté sur la figure 3, le système conforme à l'invention comprend des moyens pour établir au moins une connexion dite de transport E2 entre chaque véhicule, par exemple un avion, et le réseau de radiotéléphone terrestre par l'intermédiaire de la station terrestre T et de la passerelle SGS, avant de recevoir toute demande d'établissement d'un appel E3 et pour utiliser cette connexion de transport E2 pour un appel dès qu'une demande d'établissement d'un appel E3 est reçue.

Plus précisément, si l'on considère deux équipements A et B de radiotéléphone, l'un équipant un véhicule et l'autre utilisé par le réseau terrestre, avant toute demande d'établissement d'un appel E3, sont établies :
- une demande de connexion E1 entre les deux équipements A et B,
- une procédure d'établissement de la connexion E2 entre ces deux équipements A et B.

Selon le mode de réalisation préféré, ladite connexion de transport E2 est maintenue dans un état de veille, c'est-à-dire dans un état non consommateur de ressources. Par exemple, elle est en phase de sonnerie.

Lorsqu'une demande de liaison E3 est émise par l'usager 1, les ressources de la connexion de transport sont activées (étape E4) et la liaison E5 avec l'usager 2 est établie, c'est-à-dire dans en état de signal de réponse.

La durée de ladite connexion de transport E2 peut être limitée et réactivée selon une temporisation.

## Revendications

1. Système procurant un service de radiotéléphone à bord d'un véhicule (Vi), ce système étant relié à un réseau de radiotéléphone terrestre public par l'intermédiaire d'un satellite (S), **caractérisé en ce qu'**il comprend des moyens pour établir au moins une connexion dite de transport (E2) entre le véhicule et le réseau de radiotéléphone terrestre avant de recevoir toute demande d'établissement d'un appel (E3) et pour utiliser cette connexion de transport (E2) pour un appel dès qu'une demande d'établissement d'un appel (E3) est reçue.

2. Système selon la revendication 1, **caractérisé en ce que** ladite connexion de transport (E2) est maintenue dans un état de veille.

3. Système selon la revendication 1 ou 2, **caractérisé en ce que** la durée de ladite connexion de transport (E2) est limitée et réactivée selon une temporisation.

4. Système selon l'une des revendications précédentes, **caractérisé en ce que** lesdits véhicules (Vi) sont des avions.

## Patentansprüche

1. System für Funktelefondienst an Bord eines Fahrzeugs (Vi), wobei dieses System mittels eines Satelliten (S) mit einem öffentlichen terrestrischen Funktelefonnetz verbunden und **dadurch gekennzeichnet ist, daß** es Vorrichtungen beinhaltet, um vor dem Empfang einer Anforderung zum Aufbau einer Telefonverbindung (E3) mindestens eine als Transportverbindung (E2) bezeichnete Verbindung zwischen dem Fahrzeug und dem terrestrischen Funktelefonnetz herzustellen und diese Transportverbindung (E2) für einen Anruf zu verwenden, sobald eine Anforderung zum Aufbau einer Telefonverbindung (E3) empfangen wird.

2. System gemäß Anspruch 1, **dadurch gekennzeichnet, daß** besagte Transportverbindung (E2) in einem Bereitschaftszustand gehalten wird.

3. System gemäß Anspruch 1 oder 2, **dadurch gekennzeichnet, daß** die Dauer der besagten Transportverbindung (E2) begrenzt ist und nach einer Verzögerung erneut aktiviert wird.

4. System gemäß einem oder mehreren der vorgenannten Ansprüche, **dadurch gekennzeichnet, daß** besagte Fahrzeuge (Vi) Flugzeuge sind.

## Claims

1. A system for providing a mobile telephone service on board a vehicle (Vi), said system being connected to a public land mobile network via a satellite (S) **characterized in that** it includes means for setting up at least one transport connection (E2) between the vehicle and the public land mobile network before receiving a call request (E3) and for then using this transport connection (E2) for a call as soon as a request to set up a call (E3) is received.

2. A system according to claim 1 **characterized in that** said transport connection (E2) remains in a standby state.

3. A system according to claim 1 or 2 **characterized in that** the duration of said transport connection (E2) is limited and reactivated in accordance with a time-delay.

4. A system according to any of the preceding claims **characterized in that** said vehicles (Vi) are aircraft.
